(19) **Europäisches Patentamt**
**European Patent Office**
**Office européen des brevets**

(11) **EP 2 360 685 B1**

(12) **EUROPEAN PATENT SPECIFICATION**

(45) Date of publication and mention
of the grant of the patent:
**15.07.2015 Bulletin 2015/29**

(51) Int Cl.:
***G10L 21/0216*** *(2013.01)*

(21) Application number: **11000139.3**

(22) Date of filing: **11.01.2011**

(54) **Noise suppression**

Rauschunterdrückung

Suppression du bruit

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2010 JP 2010004700**

(43) Date of publication of application:
**24.08.2011 Bulletin 2011/34**

(73) Proprietor: **Yamaha Corporation
Hamamatsu-shi, Shizuoka-ken (JP)**

(72) Inventors:
 • **Yamada, Makoto
  Hamamatsu-shi
  Shizuoka-ken (JP)**
 • **Kondo, Kazunobu
  Hamamatsu-shi
  Shizuoka-ken (JP)**

(74) Representative: **Schmidbauer, Andreas Konrad
  Wagner & Geyer
  Patent- und Rechtsanwälte
  Gewürzmühlstrasse 5
  80538 München (DE)**

(56) References cited:
**WO-A1-00/63887**

 • **OHTSUKI N ET AL: "The effect of the musical
  noise suppression in speech noise reduction
  using RSF", COMMUNICATIONS AND
  INFORMATION TECHNOLOGY, 2004. ISCIT 2004.
  IEEE INTE RNATIONAL SYMPOSIUM ON
  SAPPORO, JAPAN OCT. 26-29, 2004,
  PISCATAWAY, NJ, USA,IEEE, vol. 2, 26 October
  2004 (2004-10-26), pages 663-667, XP010783580,
  DOI: DOI:10.1109/ISCIT.2004.1413798 ISBN:
  978-0-7803-8593-1**
 • **ZENTON GOH ET AL: "Postprocessing Method
  for Suppressing Musical Noise Generated by
  Spectral Subtraction", IEEE TRANSACTIONS ON
  SPEECH AND AUDIO PROCESSING, IEEE
  SERVICE CENTER, NEW YORK, NY, US, vol. 6,
  no. 3, 1 May 1998 (1998-05-01), XP011054302,
  ISSN: 1063-6676**
 • **UEMURA Y ET AL: "AUTOMATIC OPTIMIZATION
  SCHEME OF SPECTRAL SUBTRACTION BASED
  ON MUSICAL NOISE ASSESSMENT VIA HIGHER-
  ORDER STATISTICS", ACOUSTIC ECHO AND
  NOISE CONTROL : A PRACTICAL APPROACH;
  [ADAPTIVE AND LEARNING SYSTEMS FOR
  SIGNAL PROCESSING, COMMUNICATIONS,
  AND CONTROL], HOBOKEN, NJ : WILEY-
  INTERSCIENCE, no. 11TH, 17 September 2008
  (2008-09-17), pages 1-4, XP002596090, ISBN:
  978-0-471-45346-8**

**Description**

BACKGROUND OF THE INVENTION

[Technical Field]

The present invention relates to technology for suppressing noise from an audio signal.

[Background Art]

Technology for suppressing noise from an audio signal has been proposed. For example, technology for subtracting a noise component spectrum from an audio signal spectrum is disclosed in Japanese patent No. JP 4123835 B2. The noise component spectrum is generated by taking the average of the spectrum of a noise interval of an audio signal over a plurality of frames.

However, in the conventional noise suppression technology disclosed Japanese patent No. JP 4123835 B2, there is a problem in that after suppressing the noise component, a component that is scattered over the time axis and frequency axis is perceived by a listener as artificial and offensive musical noise.

With regard to the prior art, attention is further drawn to OHTSUKI N ET AL: "The effect of the musical noise suppression in speech noise reduction using RSF", COMMUNICATIONS AND INFORMATION TECHNOLOGY, 2004. ISCIT 2004. IEEE INTE RNATIONAL SYMPOSIUM ON SAPPORO, JAPAN OCT. 26-29, 2004, PISCATAWAY, NJ, USA, IEEE, vol. 2, 26 October 2004, pages 663-667, XP010783580, ISBN: 978-0-7803-8593-1.

SUMMARY OF THE INVENTION

Taking that problem into consideration, the object of the present invention is to make it difficult to perceive musical noise that is caused by suppressing the noise component.

In order to solve the problems, the noise suppressing device of the present invention is designed for suppressing noise of a first audio signal to generate a second audio signal, and comprises the features as set forth in claim 1.

In this construction, a second audio signal is generated by adding a plurality of suppression components after suppressing different noise components. In other words, musical noise that is generated in each suppression component due to suppression of noise component becomes close to Gaussian noise through addition of the plurality of the suppression components by a signal generation unit (central limit theorem). Therefore, it is possible to make it difficult to perceive musical noise caused by suppressing noise components.

The addition of a plurality of suppression components can be achieved in either the time domain or frequency domain. In other words, the concept of suppression components is a concept that includes both an audio signal in the time domain (for example, an audio signal yk(t) in a first embodiment) and spectrum in the frequency domain (for example, a spectrum Yk (f) in a third embodiment).

When the plurality of suppression components are added with each other by the signal generation unit, the simple average or weighted average (weighted sum) are preferably employed. In a preferred from, the signal generation unit calculates a weighted sum of the plurality of the suppression components for generating the second audio signal by using weight values that are individually set for the respective suppression components.

In a specific form, the noise acquisition unit acquires the plurality of the noise components from a plurality of extraction intervals of the first audio signal, the extraction intervals being positioned differently from each other on the time axis of the first audio signal; the noise suppressing unit sequentially executes suppression processing of the plurality of noise components for each unit time of the first audio signal; and the signal generation unit generates the second audio signal of a target unit time by calculating the weighted sum of the plurality of the suppression components of the target unit time with using the weight values such that the weight value of the suppression component is set according to the position of the extraction interval from which the noise component corresponding to the suppression component is acquired, so the closer the position of the extraction interval relative to the target unit time, the greater the weight value of the suppression component.

In the form above, the noise acquisition unit acquires the plurality of the noise components from a plurality of extraction intervals of the first audio signal. The noise suppression unit generates each suppression component by suppressing each noise component from one unit time of the first audio signal, thereby providing per one unit time a plurality of suppression components different from each other in correspondence to the plurality of the noise components extracted from the plurality of extraction intervals.

Then, the weight value of the suppression component is set according to the position of the extraction interval from which the noise component corresponding to the suppression component is acquired, so the closer the position of the extraction interval relative to the one unit time, the greater the weight value of the suppression component. So, even when noise components change over time, there is an advantage in that a second audio signal is generated of which the noise is adequately suppressed. This form of the invention will be described in more detail as a second embodiment of the invention.

The noise component resulting from adding musical noise of each suppression component for a plurality of suppression components is near Gaussian noise. In this regard, according to a preferred from, the signal generation unit generates the second audio signal by summing the plurality of the suppression components so that Gaussian noise remains in the second audio signal as a result of the summing, and the noise suppressing device further comprises a Gaussian noise suppression unit that suppresses the Gaussian noise from the second audio signal that is generated by the signal generation unit.

With the construction described above, a noise component (Gaussian noise) that is converted from musical noise is also suppressed, so the effect of enhancing the target audio component is especially notable. This form of the invention will be described in more detail as a fourth embodiment of the invention.

The noise suppressing device of a preferred form of the present invention comprises: a plurality of processing modules that are provided in correspondence to a plurality of first audio signals that are generated by a plurality of corresponding audio pickup devices separated from each other, each processing module including the noise suppression unit and the signal generation unit for providing each second audio signal; and an enhancement unit that enhances a particular component that is contained in each second audio signal and that is associated with sound arriving at the corresponding audio pickup device from a specified direction.

For example, preferably a beam formation process (a delay-sum (DS) type beam formation) of applying a delayed amount to each of a plurality of second audio signals according to a target direction as well as performing addition thereof is preferred as an enhancement process.

With the construction above, enhancement processing is executed on the second audio signals that are generated by each processing module, so the effect of enhancing the target audio component is very notable. This form of the invention will be explained in more detail as a fifth embodiment of the invention.

The noise suppressing device of each form of the invention described above can also be achieved by hardware (electronic circuits) such as a special DSP (Digital Signal Processor) for suppressing noise components, as well as a general-purpose processing unit such as a CPU (Central Processing Unit) working with a program (software). The program of this invention causes a computer to execute a noise acquisition process of acquiring a plurality of noise components which are different from each other; a noise suppression process of generating each suppression component by suppressing each noise component from the first audio signal, thereby providing a plurality of suppression components different from each other in correspondence to the plurality of the noise components; and a signal generation process of generating the second audio signal by summing the plurality of the suppression components that are provided by the noise suppression process.

With the program above, the same functions and effects of the noise suppressing device of the invention are achieved. The program of the present invention can be provided to a user in a form of being stored on a machine readable storage medium that is readable by a computer, and then installed in a computer, or can be distributed over a communication network and provided from a server and installed in a computer.

BRIEF DESCRIPTION OF THE DRAWINGS

FIG. 1 is a block diagram of a noise suppressing device of a first embodiment of the present invention.
FIG. 2 is a diagram for explaining the extraction of a noise component.
FIG. 3 is a graph for explaining the effect of a first embodiment.
FIG. 4 is a graph for explaining the effect of a first embodiment.
FIG. 5 is a block diagram of a noise suppressing device of a third embodiment of the present invention.
FIG. 6 is a block diagram of a noise suppressing device of a fourth embodiment of the present invention.
FIG. 7 is a block diagram of a noise suppressing device of a fifth embodiment of the present invention.

DETAILED DESCRIPTION OF THE INVENTION

<A: First Embodiment>

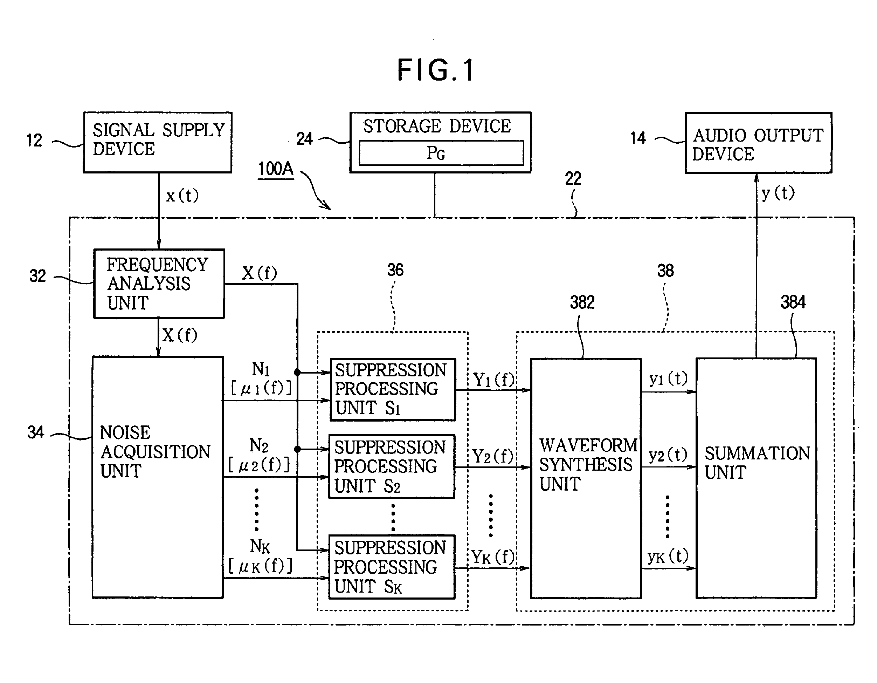

FIG. 1 is a block diagram of a noise suppressing device 100A of a first embodiment of the present invention. A signal supply device 12 and audio output device 14 are connected to the noise suppressing device 100A. The signal supply device 12 supplies a first audio signal x(t) in the time domain that expresses an audio waveform (voice or music) to the noise suppressing device 100A. A sound pickup device that picks up surrounding sound and generates an audio signal x(t), a reproduction device that acquires an audio signal x(t) from a portable or internal recording medium and outputs that signal to the noise suppressing device 100A, or a communication device that receives an audio signal x(t) from a communication network and outputs that signal to the noise suppressing device 100A are used as the signal supply device 12.

The noise suppressing device 100A is an audio processing device that generates a second audio signal y(t) from the first audio signal x(t) that the signal supply device 12 supplies. The audio signal y(t) is a signal in the time domain that expresses the waveform of an audio component of which the noise component has been suppressed (audio signal having an emphasized target audio component) from the audio signal x(t). The audio output device 14 (for example a speaker or headphones) outputs sound waves according to the audio signal y(t) that the noise suppressing device 100A generates.

As illustrated in FIG. 1, the noise suppressing device 100A is expressed as a computer system that comprises a processing unit 22 and a storage device 24. The storage device 24 stores a program PG that is executed by the processing unit 22, and data that is used by the processing unit 22. A known memory medium such as a semiconductor memory medium or magnetic memory medium, or a combination of a plurality of kinds of memory media can be arbitrarily used as the storage device 24. Construction wherein the audio signal x(t) is stored in the storage device 24 (and consequently the signal supply device 12 is omitted) is also suitable.

By executing the program stored in the storage device 24, the processing unit 22 can perform a plurality of functions (frequency analysis unit 32, noise acquisition unit 34, noise suppressing unit 36, signal generation unit 38) for generating an output audio signal y(t) from an input audio signal x(t). Construction wherein each of the functions of the processing unit 22 are distributed on an integrated circuit, or construction wherein a special electronic circuit (DSP) provides each of the functions can also be adopted.

The frequency analysis unit 32 in FIG. 1 sequentially generates a spectrum (complex spectrum) X(f) of an audio signal x(t) for each unit time (frame) along the time axis. In order to generate the spectrum X(f), known frequency analysis such as short-time Fourier transform can be arbitrarily employed. A filter bank that comprises a plurality of bandpass filters that diverge the passing bands can also be used as the frequency analysis unit 32.

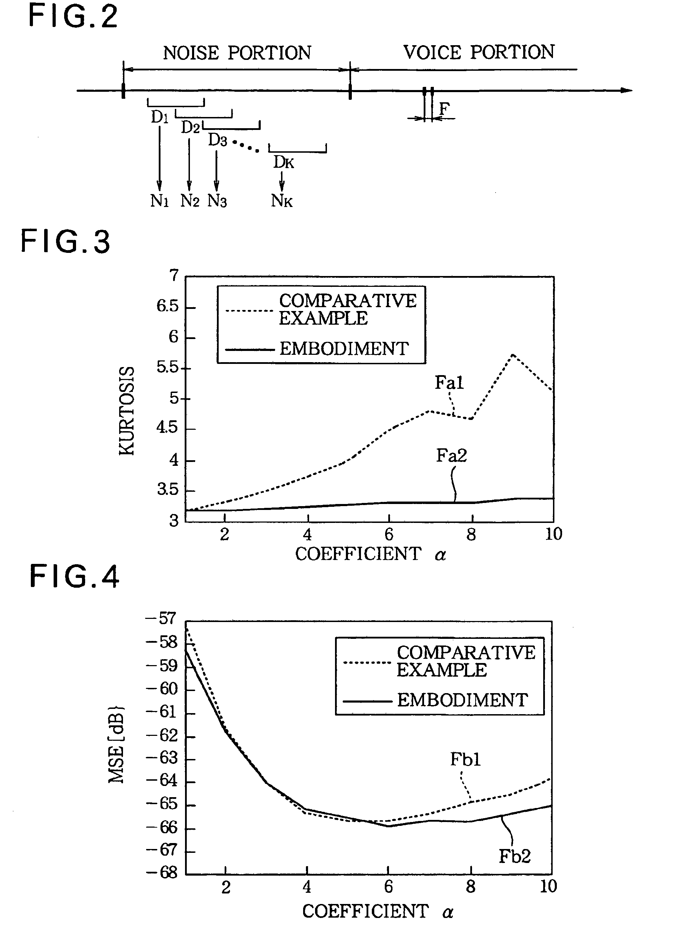

The noise acquisition unit 34 acquires K types of noise components N1 to NK having different phases. Noise components Nk (k = 1 to K) are expressed by the spectra (power spectrum) $\mu k(f)$ in the frequency domain. The noise acquisition unit 34 of this first embodiment generates noise components N1 to NK from an audio signal x(t) of a noise portion in which the target sound does not exist. More specifically, as illustrated in FIG. 2, the noise acquisition unit 34 uses known voice detection (VAD: voice activity detection), for example, to separate an audio signal x(t) into a voice portion and noise portion, and in the noise portion, generates noise components Nk from K number of extraction intervals D1 to DK having different phases on the time line. For example, the mean square of the spectrum X(f) over a plurality of unit times (frames) F in the kth extraction interval Dk (power spectrum) is generated as the spectrum $\mu k(f)$ of the noise component Nk.

It should be noted that the invention is not limited to the embodiment of FIG. 2. It is sufficient for the invention to meet the condition that the noise characteristics of the K number of noise components N1 to NK (spectra $\mu l(f)$ to $\mu K(f)$) are different from each other. For example, the noise acquisition unit 34 separates an audio signal x(t) into first and second voice portions and first and second noise portions, and then generates noise components N1 to Ni from the first noise portion and generates noise components N(i+1) to Nk from the second portion.

The noise suppressing unit 36 in FIG. 1 generates K number of spectra Y1(f) to YK(f) that correspond to the noise components N1 to NK having different phases by suppressing each of the K number of noise component N1 to NK from the spectrum X(f) of the common audio signal x(t) (both the sound portion and noise portion). Spectrum Yk(f) is the complex spectrum of the signal y(t) (hereafter, referred to as the 'suppression signal') in the time domain of which the kth noise component Nk has been suppressed from the audio signal x(t). Suppression of each noise component Nk is sequentially executed for each unit time F (each spectrum X(f)) of the audio signal x(t).

As illustrated in FIG. 1, the noise suppressing unit 36 is constructed such that it includes K number of suppression processing units S1 to SK that correspond to the noise components Nk ( N1 to NK) having different phases. The kth suppression processing unit Sk generates a spectrum Yk(f) of a suppression signal yk(t) by subtracting (spectrum subtraction) the spectrum $\mu k(f)$, which corresponds to the noise component Nk among the K number of noise components N1 to NK generated by the noise acquisition unit 34, from the spectrum X(f) of the audio signal x(t). More specifically, the spectrum Yk(f) is defined by Equation 1 below (symbol j is the imaginary number unit).

$$Y_k(f) = P_k(f)^{1/2} e^{j\theta x(f)} \qquad \ldots\ldots(1)$$

Symbol $\theta x(f)$ in Equation 1 is the phase spectrum of the audio signal x(t). Moreover, the symbol Pk(f) in Equation 1 is the power spectrum of the suppression signal yk(t), and is defined in Equation 2a and Equation 2b below.

$$P_k(f) = \begin{cases} |X(f)|^2 - \alpha \cdot \mu_k(f) \quad \dots\dots(2a) \\ \qquad\qquad (if \quad |X(f)|^2 > X_{TH}) \\ \beta \cdot |X(f)|^2 \dots\dots(2b) \quad (otherwise) \end{cases}$$

In other words, at a frequency where the power $|X(f)|^2$ of the audio signal x(t) is greater than a specified value XTH, the power spectrum Pk(f) of the suppression signal yk(t) is set to a value obtained by subtracting the product of a specified coefficient (subtraction coefficient) $\alpha$ and the spectrum (power spectrum) $\mu$k(f) of the noise component Nk from the power spectrum $|X(f)|^2$ of the audio signal x(t) as shown in Equation 2a. The specified value XTH is set to the product of the coefficient $\alpha$ and the spectrum $\mu$k(f). The coefficient $\alpha$ is a variable that sets the degree of noise suppression (suppression performance). More specifically, the larger the coefficient $\alpha$ is, the higher the suppression performance for suppressing the noise component is.

On the other hand, at a frequency where the power $|X(f)|^2$ of the audio signal x(t) is less then the specified value XTH, the power spectrum Pk(f) of the suppression signal yk(t) is set as indicated in Equation 2b to the product of a specified coefficient (flooring coefficient) $\beta$ and the power $|X(f)|^2$ of the audio signal x(t). By executing the calculation above in parallel for the K number of suppression processing units S1 to SK, the K number of spectra Y1(f) to YK(f) are sequentially generated for each unit time F of the audio signal x(t). Construction whereby the coefficient $\alpha$ and coefficient $\beta$ are variably controlled, or construction wherein the power spectrum $|X(f)|^2$ of Equation 2b is replaced by the spectrum $\mu$k(f) of the noise component Nk can also be employed.

The signal generation unit 38 in FIG. 1 generates an audio signal y(t) by adding the K suppression components (spectra Y1(f) to YK(f) of suppression signals y1(t) to yK(t)) that the noise suppression unit 36 generated. As illustrated in FIG. 1, the signal generation unit 38 comprises a waveform synthesis unit 382 and summation unit 384.

The waveform synthesis unit 382 generates suppression signals y1(t) to yK(t) in the time domain from the K spectra Y1(f) to YK(f) that the noise suppression unit 36 generated. More specifically, the waveform synthesis unit 382 generates suppression signals yk(t) (y1(t) to yK(t)) by converting spectra Yk(f) that are generated for each unit time F to signals in the time domain by inverse Fourier transformation, and mutually joining signals of the present time slot with the previous and following unit times F.

The summation unit 384 generates an audio signal y(t) by adding (averaging) the K number of suppression signals y1(t) to yK(t) that the waveform synthesis unit 382 generated. The summation unit 384 of this first embodiment calculates the audio signal y(t) by taking the simple mean value (weighted average in which the weight values have the same value) as expressed by Equation 3 below. The audio signal y(t) that is generated by the summation unit 384 through the calculation of Equation (3) is supplied to the audio output device 14 and reproduced as sound waves.

$$y(t) = \{y_1(t) + y_2(t) + \dots + y_K(t)\} / K \quad \dots\dots(3)$$

In the form described above, the audio signal y(t) is generated by adding K number of suppression signals y1(t) to yK(t) that are obtained by suppressing the noise components N1 to NK from the audio signal x(t), so as will be explained in detail below, the embodiment is advantageous in that musical noise that is caused by suppressing the noise component Nk becomes difficult to perceive in the audio signal y(t).

The suppression signal yk(t) that is obtained by suppressing the noise component Nk from the audio signal x(t) (mixed signal comprising the target audio component and noise component) is expressed by Equation (4).

$$y_k(t) = h(t) + \varepsilon_k(t) \quad \dots\dots(4)$$

The symbol h(t) in Equation 4 is the target audio component of the audio signal x(t). Also, the symbol $\varepsilon$k(t) is the remaining component of the noise component included in the audio signal x(t) that remains after processing by the suppression processing unit Sk, and corresponds to an audio component (non-Gaussian noise) that can be perceived by a listener as musical noise when reproducing the suppression signal yk(t).

The audio signal y(t) after addition (after averaging) by the summation unit, is expressed by Equation 5 below as obtained from Equation 3 and Equation 4.

$$y(t) = h(t) + \frac{1}{K} \sum_{k=1}^{K} \varepsilon_k(t) \quad \ldots\ldots(5)$$

The distribution of numerical values of the second item on the right of Equation 5, when compared with the distribution of the numerical values of the noise component (musical noise) $\varepsilon$ k(t) in Equation 4 is close to a normal distribution (central limiting theorem). In other words, the remaining noise components $\varepsilon$k(t) in each of the suppression signals yk(t) are converted to a component close to Gaussian noise by processing of the summation unit 384. Therefore, it is possible to make it difficult for a listener to perceive musical noise that is caused by suppressing the noise component Nk.

Next, attention is placed on kurtosis as a gauge for measuring the amount of musical noise that occurs due to suppressing noise. Kurtosis of the frequence distribution of the signal strength (probability density function) functions as a gauge for measuring the Gaussian characteristic, and is correlated with the amount of occurrence of musical noise, which is non-Gaussian noise. More specifically, the higher the kurtosis is of the frequence distribution of the signal strength, the more the tendency is for the musical noise to become evident. The correlation between the kurtosis and musical noise is described by Yoshihisa Uemura, et al., "Relationship Between Logarithmic Kurtosis Ratio and Degree of Musical Noise Generation on Spectral Subtraction", The Institute of Electronics, Information and Communication Engineers, technical Report of IEICE, 108 (143), pp. 43-48, July 11, 2008.

FIG. 3 is a graph illustrating the relationship between the kurtosis of the frequence distribution of the signal intensity after noise suppression (vertical axis) and the coefficient $\alpha$ of Equation 2a (horizontal axis). In FIG. 3, both the characteristic Fa1 (dashed line) of the audio signal that is generated by conventional noise suppression (hereafter, referred to as the comparative example) of reducing only one kind of noise component from the audio signal x(t), and the characteristic Fa2 (solid line) of the audio signal y(t) that is generated by this first embodiment are given. Characteristic Fa1 can also be understood to be the characteristic of the suppression signal yk(t) immediately after suppression of the noise component Nk (before addition by the summation unit).

As indicated by the characteristic Fa1 in FIG. 3, kurtosis after noise suppression in the comparative example becomes a large value when compared with the kurtosis of Gaussian noise, so it can be confirmed that musical noise, which is non-Gaussian noise, becomes evident. Moreover, the more the suppression performance of the noise component is improved (coefficient $\alpha$ is increased), the more the musical noise becomes evident. On the other hand, as indicated by characteristic Fa2 in FIG. 3, kurtosis of the audio signal y(t) that is generated by this first embodiment is kept to a value close to the kurtosis of Gaussian noise [3], so it becomes difficult to perceive musical noise from the reproduced sound of the audio signal y(t). In addition, the kurtosis of the audio signal y(t) over a wide range of coefficient $\alpha$ is kept at a small value, so there is an advantage in that even when the coefficient $\alpha$ is set to a large value in order to improve the suppression performance, the musical noise in the audio signal y(t) is effectively reduced.

FIG. 4 is a graph illustrating the relationship between the error in the audio signal after noise suppression of the target audio component (vertical axis) and the coefficient $\alpha$ in Equation 2a (horizontal). In FIG. 4, both the characteristic Fb1 (dashed line) of the audio signal that is generated by noise suppression in the comparative example, and the characteristic Fb2 (solid line) of the audio signal y(t) that is generated in the first embodiment are given. The vertical axis in FIG. 4 corresponds to the mean square error (MSE) of the audio signal and target audio component after noise suppression, and means that the smaller the value the higher the noise suppression performance is (it is possible to effectively emphasize the target audio component through adequate suppression of the noise component).

As can be understood from FIG. 4, with this first embodiment (characteristic Fb2), it is possible to achieve suppression performance that is equal to or better than that of the comparative example (characteristic Fb1) while at the same time effectively reducing the musical noise as described above. Moreover, when coefficient $\alpha$ is set to a very large value (6 or greater) in the comparative example, the mean square error increases due to excessive suppression of the noise component, however, there is hardly any change in the mean square error with this first embodiment even when the coefficient $\alpha$ is set to a large value. In other words, with this first embodiment, there is an advantage in that very strong enhancement of a target audio component can be achieved as the coefficient $\alpha$ is increased (even under excessive suppression of the noise component).

<B: Second Embodiment>

A second embodiment of the present invention is explained. In the examples below, the same reference numbers will be given to elements that have the same operation and function as elements in the first embodiment, and a detailed explanation of those elements is omitted for convenience.

The summation unit 384 in the first embodiment calculates an audio signal y(t) using the simple average of the K system of suppression signals y1(t) to yK(t) as expressed in Equation 3 above. The summation unit 384 of this second embodiment calculates the weighted average (weighted sum) of the K system of suppression signals y1(t) to yK(t) as the audio signal y(t) as expressed by Equation 3a below.

$$y(t) = w_1 \cdot y_1(t) + w_2 \cdot y_2(t) + \ldots + w_K \cdot y_K(t) \quad \ldots\ldots(3a)$$

The symbol wk in Equation 3a is the weight value of the suppression signal yk(t), and is selected such that it becomes the total sum of the K number of weight values w1 to wK becomes 1 (w1 + w2 + ... + wK = 1). The first embodiment can also be understood to be a form wherein the weight values w1 to wK of Equation 3a are set to the same value (1/K).

The method of selecting weight values w1 to wK is arbitrary, however, for example, construction is preferred wherein weight values wk (w1 to wK) are variably set for each unit time F according to the position of the extraction intervals Dk that are the sources for extracting the noise components Nk that are applied in the generation of the suppression signals yk(t). More specifically, the weight value wk of each suppression signal yk(t) that is generated from one unit time F of the audio signal x(t) is set to a larger number the closer the extraction interval Dk of the noise component Nk is to that unit time F. For example, in looking at the one unit time F that is conveniently illustrated in the voice portion of FIG. 2, of the K system suppression signals y1(t) to yK(t) that are generated from the audio signal x(t) of that unit time F, the weight value wk that corresponds to the suppression signal yk(t) after suppression of the noise component Nk of the extraction interval Dk that is near in time to that unit time F is set to a large number. The unit time F that is illustrated in FIG. 2 is located in the voice portion after passing through the noise portion, so the weight values wk that correspond to the later extraction intervals Dk among the K number of extraction intervals Dl to DK (extraction intervals Dk near the unit time F) are set to large values (w1 < w2 < ...< wK).

With the construction described above, an audio signal y(t) is generated using the weighted average (weighted sum) of the suppression signals y1(t) to yK(t), so when compared with the first embodiment of calculating the simple average of the suppression signals y1(t) to yK(t), there is an advantage in that it is possible to variably control how much of an effect the noise components N1 to NK play on the audio signal y(t). Moreover, there tends to be a high possibility that the audio characteristic of the noise component that is actually included in each unit time F of the audio signal x(t) will resemble the noise component Nk of the extraction interval Dk that is near in time to that unit time F, so with the construction described above of setting the weight values wk to a larger value when the closer the weight value wk that corresponds to the noise components Nk of the extraction interval Dk is to that unit time F, there is an advantage in that it is possible to adequately emphasize the target audio component of the audio signal x(t) (it is possible to adequately suppress the noise component) even when the noise component changes over time.

<C: Third Embodiment>

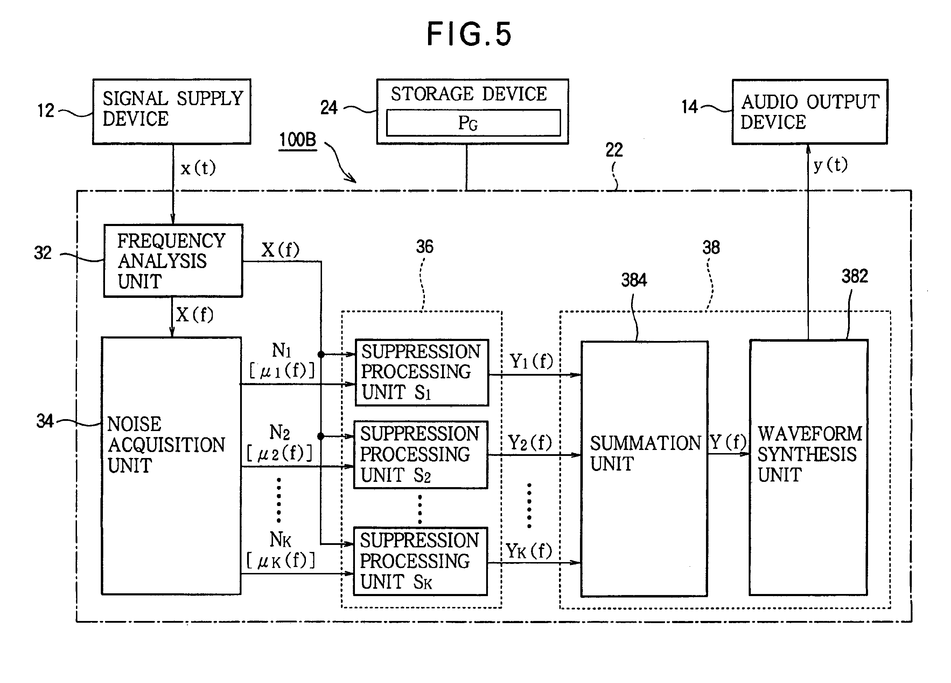

FIG. 5 is a block diagram of a noise suppressing device 100B of a third embodiment of the present invention. As illustrated in FIG. 5, the noise suppressing device of this third embodiment is constructed such that the summation unit 384 and waveform synthesis unit 382 of the signal generation unit 38 of the first embodiment have been mutually exchanged. The summation unit 384 sequentially generates spectra Y(f) of the audio signal y(t) for each unit time F by adding (averaging) the K number of spectra Y1(f) to YK(f) that are generated for each unit time F by the noise suppression unit 36. More specifically, the spectra Y (f) are calculated by performing the calculation (simple average) of Equation 6 below.

$$Y(f) = \{Y_1(f) + Y_2(f) + \ldots + Y_K(f)\}/ K \quad \ldots\ldots(6)$$

The waveform synthesis unit 382 in the stage following the summation unit 384 generates an audio signal y(t) in the time domain from the spectrum Y(f) generated by the summation unit 384. More specifically, the waveform synthesis unit 382 converts the spectra Y(f) for each unit time F to signals in the time domain, and generates an audio signal y(t) by connecting the signals together. The audio signal y(t) that is generated by the waveform synthesis unit 382 is supplied to the audio output device 14.

The same effect as in the first embodiment is also achieved in this third embodiment. Moreover, in this third embodiment, it is enough to perform conversion from the frequency domain to the time domain for one system of spectra Y(f), so when compared to the first embodiment in which it is necessary to perform conversion to the time domain for each of the K number of spectra Y1(f) to YK(f), there is an advantage in that the processing load of the waveform synthesis unit 382 is reduced.

The construction of the second embodiment that uses the weighted average in generating the audio signal y(t) can similarly be applied to this third embodiment. In other words, as illustrated by Equation 6a, the weighted average (weighted sum) of the K number of spectra Y1(f) to YK(f) is sequentially generated for each unit time F as the spectra Y(f) for the audio signal y(t). The method of selecting weight values w1 to wK is the same as in the second embodiment. With construction that uses Equation 6a, the same effect as in the third embodiment is achieved.

$$Y(f) = w_1 \cdot Y_1(f) + w_2 \cdot Y_2(f) + \ldots + w_K \cdot Y_K(f) \quad \ldots\ldots(6a)$$

<D: Fourth Embodiment>

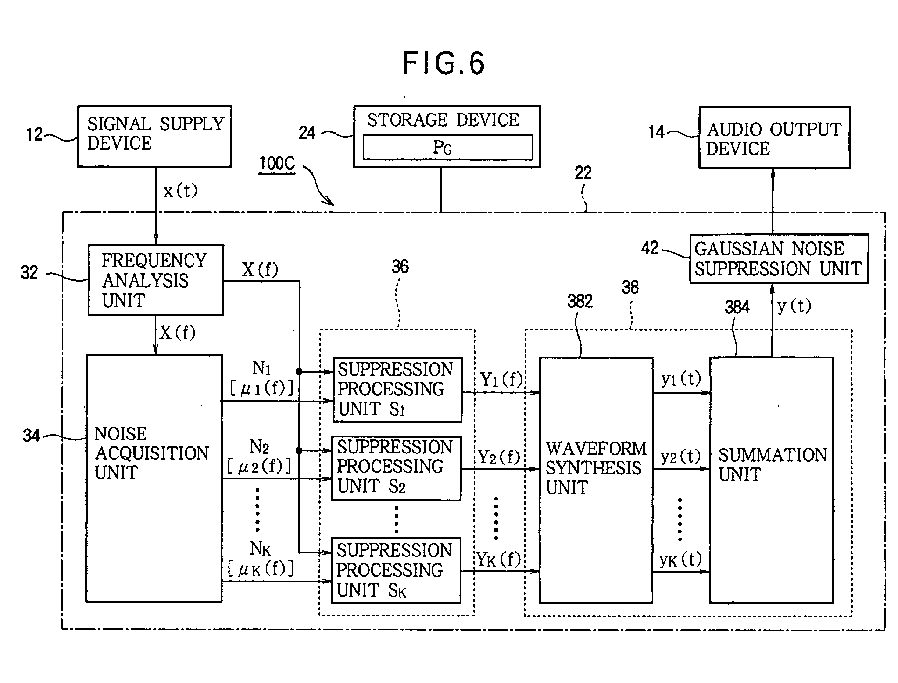

FIG. 6 is a block diagram of a noise suppressing device 100C of a fourth embodiment of the present invention. As illustrated in FIG. 6, the noise suppressing device 100C of this fourth embodiment has construction wherein a Gaussian noise suppression unit 42 is added to the noise suppressing device 100A of the first embodiment. The Gaussian noise suppression unit 42 is a filter that suppresses Gaussian noise that is included in the audio signal y(t). A known filter that is suitable for suppressing or removing Gaussian noise can be arbitrarily used as the Gaussian noise suppression unit 42. The audio signal after processing by the Gaussian noise suppression unit 42 is supplied to the audio output device 14 and reproduced as sound waves.

As was explained with reference to Equation 5 above, musical noise (noise component $\varepsilon k(t)$) that is included in each suppression signal y1(t) to yK(t) is added by the signal generation unit 38 and converted to Gaussian noise. With this fourth embodiment, the Gaussian noise after being converted from musical noise (second item on the right side of Equation 5) is suppressed by the Gaussian noise suppression unit 42, so the effect of enhancing the target audio component particularly stands out when compared with the first embodiment in which Gaussian noise remains in the audio signal y(t). In the explanation above, for convenience the first embodiment is taken to be the basis of this embodiment, however, the Gaussian noise suppression unit 42 of this fourth embodiment can similarly be added to the second embodiment or third embodiment.

<E: Fifth Embodiment>

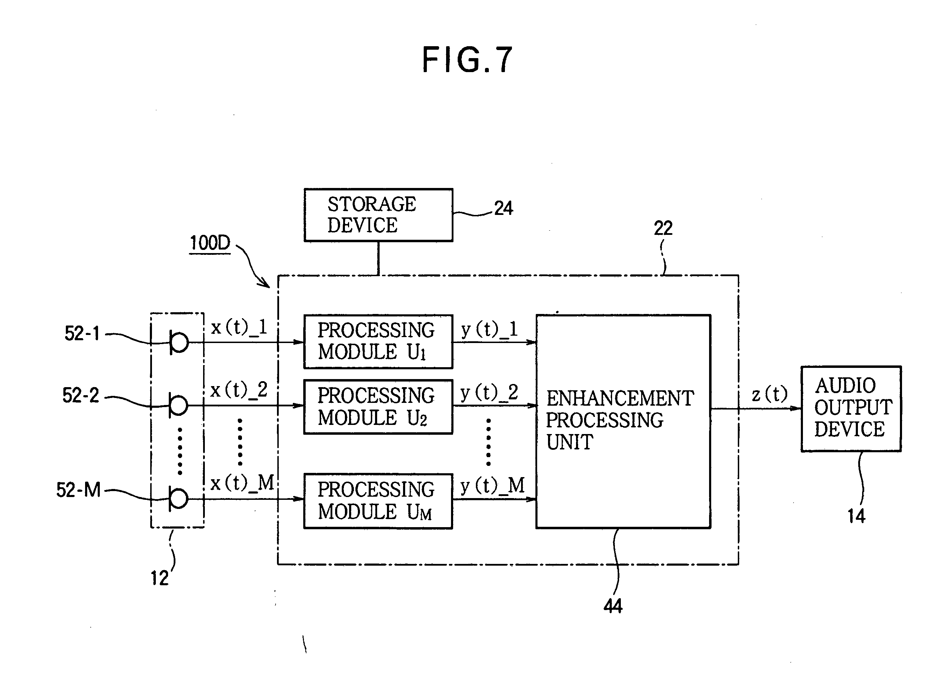

FIG. 7 is a block diagram of a noise suppressing device 100D of a fifth embodiment of the present invention. As illustrated in FIG. 7, the signal supply device 12 that is connected to the noise suppressing device 100D, is a collection of M number of audio pickup devices 52-1 to 52-M (microphone array). The M number (M is a natural number 2 or greater) of audio pickup devices 52-1 to 52-M are arranged in a linear or planar shape with an interval therebetween. The audio pickup devices 52-m (m = 1 to M) pickup sound that arrives from the surroundings and generate audio signals x(t)_m.

As illustrated in FIG. 7, by executing the program stored in the storage device 24, the calculation processing unit 22 of the noise suppressing device 100D functions as M number of processing modules Ul to UM and an enhancement processing unit 44. The processing modules Ul to UM correspond to different audio pickup devices 52-m.

Similar to the noise suppressing device 100A of the first embodiment, each processing module Um comprises a frequency analysis unit 32, noise acquisition unit 34, noise suppression unit 36 and signal generation unit 38, and generates an audio signal y(t)_m, of which the noise component has been suppressed, from the audio signal x(t)_m of the audio pickup device 52-m that corresponds to the processing module Um. The method that a processing module Um uses to generate an audio signal y(t)_m from an audio signal x(t)_m is the same as the method that the noise suppressing device 100A of the first embodiment uses to generate an audio signal y(t) from an audio signal x(t). The noise components N1 to NK that are used by the processing modules U1 to UM are common. Therefore, construction wherein the noise components N1 to NK that are generated by one noise acquisition unit 34 are used in common by the processing modules U1 to UM is also suitable. However, construction can also be employed wherein the noise components N1 to NK are different for each processing module Uk.

The enhancement processing unit 44 in FIG. 7 generates an audio signal z(t) by performing an enhancement process on the audio signals y(t)_1 to y(t)_M that are generated by the processing modules U1 to UM. The enhancement process is a process of enhancing the audio component (target audio component) that arrives at the audio pickup devices 52-1 to 52-M from a specified direction with respect to other components. For example, a delay-sum (DS) type beam formation process is employed in which a delay that corresponds to the direction of the target audio component is applied to each of the audio signals y(t)_1 to y(t)_M. Then by adding them together, the delay-sum type beam formation process enhances the target audio component. The audio signal z(t) after the enhancement process is supplied to the audio output device 14 and reproduced as sound waves. The enhancement process by the enhancement processing unit 44 can be executed in either the time domain or frequency domain.

As explained above, in this fifth embodiment, a target audio component from a specified direction is emphasized by performing enhancement processing on an audio signal y(t)_1 to y(t)_M that are generated by the processing modules U1 to UM. Therefore, in addition to the same effect as in the first embodiment of musical noise becoming difficult to perceive, an effect of effectively suppressing a Gaussian noise component that remains in the audio signal y(t)_m (second item on the right side of Equation 5) with respect to the target audio component is also achieved.

In the explanation above, for convenience, the first embodiment is taken to be the basis of this embodiment, however, the construction of this fifth embodiment that executes an enhancement process on a plurality of audio signal y(t)_1 to y(t)_M can similarly be applied to the second through fourth embodiments. In other words, construction wherein the summation unit 384 of each processing module Uk calculates the weighted average of suppression signals y1(t) to yK(t) (second embodiment), or construction wherein the summation unit 384 of each processing module Uk adds (simple average or weighted average) the spectra Y1(f) to YK(f) of the suppression signals y1(t) to yK(t) are also suitable. Moreover, construction wherein there is a Gaussian noise suppression unit 42 of the fourth embodiment in each processing module Uk can also be adopted.

<F: Variations>

Each of the embodiments above can be modified. More specifically, detailed examples of variations are given below. It is also possible to suitably combine two or more forms arbitrarily selected from the following examples.

(1) Variation 1

In each of the embodiments above, the spectra $\mu k(f)$ of the noise components Nk are subtracted from the spectrum X(f) of the audio signal x(t) (spectral subtraction), however, a known technique can be arbitrarily used for suppression of the noise components Nk. For example, voice enhancement that uses a method such as the MMSE-STSA method, MAP estimation method or Wiener filter can be applied to the suppression of noise components Nk of each form described above. The MMSE-STSA method is disclosed in Y. Ephraim and D. Malah, "Speech Enhancement Using a Minimum Mean-square Error Short-time Spectral Amplitude Estimator", IEEE ASSP, vol. ASSP-32, no. 6, pp. 1109-1121, Dec. 1984, and the MAP estimation method is disclosed in T. Lotter and P. Vary, "Speech Enhancement By MAP Spectral Amplitude Estimation Using a Super-Gaussian Speech Model", EURASIP Journal on Applied Signal Processing, vol. 2005, no. 7, pp. 1110-1126, July 2005. Moreover, in Equation 2a, an example of performing subtraction among power spectra ($|X(f)|^2 - \alpha \cdot \mu k(f)$) is given, however, by subtracting the amplitude spectra $\mu k(f)^{1/2}$ of the noise components Nk from the amplitude spectrum $|X(f)|$ of the audio signal x(t), construction of generating the amplitude spectra $Pk(f)_{1/2}$ of the suppression signals yk(t) ($Pk(f)^{1/2} = |X(f)| - \alpha \cdot \mu k(f)^{1/2}$) can also be employed.

(2) Variation 2

In each of the embodiments described above, noise components Nk (spectra $\mu k(f)$) are generated from each of the extraction intervals Dk of the audio signal x(t), however, in the present invention, the method of acquiring noise components N1 to NK is arbitrary. For example, in each of the embodiments above, spectra $\mu k(f)$ of the noise components Nk are generated by the mean square of spectra X(f) over a plurality of unit times F within the extraction interval Dk, however, construction of using one spectrum X(f) for each unit time F as the spectra (complex spectra) $\mu k(f)$ of the noise components Nk can be used.

Furthermore, it is not necessary to have construction of extracting noise components Nk from the audio signal x(t). For example, construction can be employed in which K types of noise components N1 to NK that are generated independent of the audio signal x(t) are stored in a storage device 24. The noise components N1 to NK are generated for the noise suppressing device 100 (100A, 100B, 100C, 100D), for example, from typical noise that is estimated as the noise that will be generated in the operating environment (for example, the operating sound of air-conditioning equipment in a conference room). The noise acquisition unit 34 acquires the noise components N1 to NK from the storage device 24 and provides them to each suppression processing unit Sk of the noise suppression unit 36. As can be seen from the explanation above, the noise acquisition unit 34 comprises elements for acquiring K number of noise components N1 to NK having different phases, where the acquisition method and acquisition source for acquiring the noise components N1 to NK are arbitrary.

(3) Variation 3

The method of setting the weight values w1 to wK in Equation 3a and Equation 6a is arbitrary. For example, construction can be used wherein the weight values w1 to wK are set to specified fixed values, or construction can be used wherein the weight values w1 to wK can be variably set according to instructions from the user.

(4) Variation 4

Construction wherein the spectrum X(f) of the audio signal x(t) is supplied from the signal supply device 12 to the noise suppressing device 100 (therefore, the frequency analysis unit 32 can be omitted), or construction wherein spectrum X(f) that is stored beforehand in the memory device 24 is the object of noise suppression can be used. Moreover, construction can be employed wherein an audio signal y(t) that is generated by the noise suppressing device 100 (audio signal z (t) in the fifth embodiment) is transmitted over a transmission network to another transmission terminal (therefore, the audio output device 14 can be omitted).

**Claims**

1. A noise suppressing device (100A) for suppressing noise of a first audio signal (x (t)) to generate a second audio signal (y(t)), comprising:

   a noise acquisition unit (34) adapted to acquire a plurality of noise components, which are different from each other, from a plurality of extraction intervals of the first audio signal, the extraction intervals being positioned differently from each other on the time axis of the first audio signal;
   a noise suppression unit (36) adapted to generate each suppression component by suppressing each noise component from the first audio signal, thereby providing a plurality of suppression components different from each other in correspondence to the plurality of the noise components, the noise suppressing unit (36) sequentially executing suppression processing of the plurality of noise components for each unit time of the first audio signal; and
   a signal generation unit (38) adapted generate the second audio signal by summing the plurality of the suppression components that are provided from the noise suppression unit.

2. The noise suppressing device according to claim 1, wherein
   the signal generation unit is adapted to calculate a weighted sum of the plurality of the suppression components for generating the second audio signal by using weight values that are individually set for the respective suppression components.

3. The noise suppressing device according to claim 1, wherein
   the signal generation unit (38) is adapted to generate the second audio signal of a target unit time by calculating the weighted sum of the plurality of the suppression components of the target unit time with using the weight values such that the weight value of the suppression component is set according to the position of the extraction interval from which the noise component corresponding to the suppression component is acquired, so the closer the position of the extraction interval relative to the target unit time, the greater the weight value of the suppression component.

4. The noise suppressing device according to any one of claims 1 to 3, further comprising a Gaussian noise suppression unit (42) adapted to suppress Gaussian noise from the second audio signal that is generated by the signal generation unit (38).

5. The noise suppressing device of any one of claims 1 to 4, further comprising:

   a plurality of processing modules (Um) that are provided in correspondence to a plurality of first audio signals that are generated by a plurality of corresponding audio pickup devices (52-m) separated from each other, each processing module (Um) including the noise suppression unit (36) and the signal generation unit (38) for providing each second audio signal; and
   an enhancement unit (44) adapted to enhance a particular component that is contained in each second audio signal and that is associated with sound arriving at the corresponding audio pickup device (52-m) from a specified direction.

6. A method of suppressing noise of a first audio signal to generate a second audio signal, the method comprising:

   acquiring a plurality of noise components, which are different from each other, from a plurality of extraction intervals of the first audio signal, the extraction intervals being positioned differently from each other on the time axis of the first audio signal;
   generating each suppression component by suppressing each noise component from the first audio signal, thereby providing a plurality of suppression components different from each other in correspondence to the plurality of the noise components, including sequentially executing suppression processing of the plurality of noise components for each unit time of the first audio signal; and
   generating the second audio signal by summing the plurality of the suppression components.

7. A machine readable storage medium for use in a computer, the medium containing program instructions executable by the computer to perform a process of suppressing noise of a first audio signal to generate a second audio signal, the process comprising:

   a noise acquisition process of acquiring a plurality of noise components, which are different from each other, from a plurality of extraction intervals of the first audio signal, the extraction intervals being positioned differently from each other on the time axis of the first audio signal;
   a noise suppression process of generating each suppression component by suppressing each noise component from the first audio signal, thereby providing a plurality of suppression components different from each other in correspondence to the plurality of the noise components, the noise suppressing unit (36) sequentially executing suppression processing of the plurality of noise components for each unit time of the first audio signal; and
   a signal generation process of generating the second audio signal by summing the plurality of the suppression components that are provided by the noise suppression process.

**Patentansprüche**

1. Rauschunterdrückungsvorrichtung (100A) zum Unterdrücken von Rauschen eines ersten Audiosignals (x(t)), um ein zweites Audiosignal (y(t)) zu erzeugen, die Folgendes aufweist:

   eine Rauscherfassungseinheit (34), die ausgelegt ist, um eine Vielzahl von Rauschkomponenten, die sich voneinander unterscheiden, aus einer Vielzahl von Extraktionsintervallen des ersten Audiosignals zu erfassen, wobei die Extraktionsintervalle unterschiedlicher voneinander auf der Zeitachse des ersten Audiosignals positioniert sind;
   eine Rauschunterdrückungseinheit (36), die ausgelegt ist, um jede Unterdrückungskomponente durch Unterdrücken jeder Rauschkomponente aus dem ersten Audiosignal zu erzeugen, wodurch eine Vielzahl von sich unterscheidenden Unterdrückungskomponenten entsprechend der Vielzahl von Rauschkomponenten vorgesehen wird, wobei die Rauschunterdrückungseinheit (36) sequentiell die Unterdrückungsverarbeitung der Vielzahl von Rauschkomponenten für jede Zeiteinheit des ersten Audiosignals ausführt; und
   eine Signalerzeugungseinheit (38), die ausgelegt ist, um das zweite Audiosignal durch Aufsummieren der Vielzahl von Unterdrückungskomponenten, die durch die Rauschunterdrückungseinheit vorgesehen werden, zu erzeugen.

2. Rauschunterdrückungsvorrichtung gemäß Anspruch 1, wobei die Signalerzeugungseinheit ausgelegt ist, um eine gewichtete Summe der Vielzahl von Unterdrückungskomponenten für das Erzeugen des zweiten Audiosignals durch Verwenden der Gewichtungswerte zu berechnen, die individuell für die entsprechenden Unterdrückungskomponenten eingestellt werden.

3. Rauschunterdrückungsvorrichtung gemäß Anspruch 1, wobei die Signalerzeugungseinheit (38) ausgelegt ist, um das zweite Audiosignal einer Zielzeitabschnitt bzw. Zielzeiteinheit durch Berechnen der gewichteten Summe der Vielzahl von Unterdrückungskomponenten der Zielzeiteinheit unter Verwendung der Gewichtungswerte zu erzeugen, so dass der Gewichtungswert der Unterdrückungskomponente gemäß der Position des Extraktionsintervalls eingestellt wird, von dem die Rauschkomponente entsprechend der Unterdrückungskomponente erfasst wird, und zwar so dass je dichter die Position des Extraktionsintervalls relativ zu der Zielzeiteinheit ist, umso größer der Gewichtswert der Unterdrückungskomponente ist.

4. Rauschunterdrückungsvorrichtung gemäß einem der Ansprüche 1 bis 3, die ferner eine Unterdrückungseinheit (42) für Gauß'sches Rauschen aufweist, die ausgelegt ist, um Gauß'sches Rauschen von dem zweiten Audiosignal zu unterdrücken, das durch die Signalerzeugungseinheit (38) erzeugt wird.

5. Rauschunterdrückungsvorrichtung gemäß einem der Ansprüche 1 bis 4, die ferner Folgendes aufweist:

eine Vielzahl von Verarbeitungsmodulen (Um), die entsprechend einer Vielzahl von ersten Audiosignalen vorgesehen ist, die durch eine Vielzahl von entsprechenden Audioaufnahmevorrichtungen (52-m) erzeugt wird, die voneinander getrennt sind, wobei jedes Verarbeitungsmodul (Um) die Rauschunterdrückungseinheit (36) und die Signalerzeugungseinheit (38) zum Vorsehen von jedem zweiten Audiosignal aufweist; und

eine Verstärkungseinheit (44), die ausgelegt ist, um eine bestimmte Komponente zu verstärken, die in jedem zweiten Audiosignal enthalten ist, und die mit dem Klang assoziiert ist, der bei der entsprechenden Audioaufnahmevorrichtung (52-m) aus einer spezifizierten Richtung ankommt.

6. Verfahren zum Unterdrücken von Rauschen eines ersten Audiosignals, um ein zweites Audiosignal zu erzeugen, wobei das Verfahren Folgendes aufweist:

Erfassen einer Vielzahl von Rauschkomponenten, die sich voneinander unterscheiden, aus einer Vielzahl von Extraktionsintervallen des ersten Audiosignals, wobei die Extraktionsintervalle unterschiedlich voneinander auf der Zeitachse des ersten Audiosignals positioniert sind;

Erzeugen jeder Unterdrückungskomponente durch Unterdrücken jeder Rauschkomponente von dem ersten Audiosignal, wodurch eine Vielzahl von Unterdrückungskomponenten, die sich voneinander unterscheiden, entsprechend der Vielzahl von Rauschkomponenten vorgesehen wird, einschließlich dem sequentiellen Ausführen der Unterdrückungsverarbeitung der Vielzahl von Rauschkomponenten für jede Zeiteinheit des ersten Audiosignals; und

Erzeugen des zweiten Audiosignals durch Aufsummieren der Vielzahl von Unterdrückungskomponenten.

7. Maschinenlesbares Speichermedium zur Verwendung in einem Computer, wobei das Medium Programmanweisungen aufweist, die durch den Computer ausführbar sind, um einen Prozess des Unterdrückens von Rauschen eines ersten Audiosignals auszuführen, um ein zweites Audiosignal zu erzeugen, wobei der Prozess Folgendes aufweist:

einen Rauscherfassungsprozess des Erfassens einer Vielzahl von Rauschkomponenten, die sich voneinander unterscheiden, aus einer Vielzahl von Extraktionsintervallen des ersten Audiosignals, wobei die Extraktionsintervalle unterschiedlich voneinander auf der Zeitachse des ersten Audiosignals positioniert sind;

einen Rauschunterdrückungsprozess des Erzeugens jeder Rauschkomponente durch Unterdrücken jeder Rauschkomponente aus dem ersten Audiosignal, wodurch eine Vielzahl von Unterdrückungskomponenten, die sich voneinander unterscheiden, entsprechend der Vielzahl von Rauschkomponenten vorgesehen wird, wobei die Rauschunterdrückungseinheit (36) sequentiell den Unterdrückungsprozess der Vielzahl von Rauschkomponenten für jede Zeiteinheit des ersten Audiosignals ausführt; und

einen Signalverarbeitungsprozess des Erzeugens des zweiten Audiosignals durch Aufsummieren der Vielzahl von Unterdrückungskomponenten, die durch den Rauschunterdrückungsprozess vorgesehen werden.

## Revendications

1. Dispositif de suppression de bruit (100A) pour supprimer le bruit d'un premier signal audio (x(t)) pour générer un deuxième signal audio (y(t)), comprenant :

un module d'acquisition de bruit (34) adapté à acquérir une pluralité de composantes de bruit, qui sont différentes entre elles, à partir d'une pluralité d'intervalles d'extraction du premier signal audio, les intervalles d'extraction étant disposés de façon différente entre eux sur l'axe des temps du premier signal audio ;

un module de suppression de bruit (36) adapté à générer chaque composante de suppression en supprimant chaque composante de bruit dans le premier signal audio, fournissant par cela une pluralité de composantes de suppression différentes entre elles en correspondance avec la pluralité de composantes de bruit, le module de suppression de bruit (36) exécutant séquentiellement un traitement de suppression sur la pluralité de composantes de bruit pour chaque temps élémentaire du premier signal audio ; et

un module de génération de signal (38) adapté à générer le deuxième signal audio en additionnant la pluralité de composantes de suppression qui sont obtenues à partir du module de suppression de bruit.

**2.** Dispositif de suppression de bruit selon la revendication 1, dans lequel le module de génération de signal est adapté à calculer une somme pondérée de la pluralité de composantes de suppression pour générer le deuxième signal audio en utilisant des valeurs de poids qui sont réglées individuellement pour les composantes de suppression respectives.

**3.** Dispositif de suppression de bruit selon la revendication 1, dans lequel le module de génération de signal (38) est adapté à générer le deuxième signal audio d'un temps élémentaire cible en calculant la somme pondérée de la pluralité de composantes suppression du temps élémentaire cible en utilisant les valeurs de poids de telle sorte que la valeur de poids de la composante de suppression est réglée en fonction de la position de l'intervalle d'extraction à partir duquel la composante de bruit correspondant à la composante de suppression est acquise, de sorte que plus la position de l'intervalle d'extraction est proche du temps élémentaire cible, plus la valeur de poids de la composante de suppression est grande.

**4.** Dispositif de suppression de bruit selon l'une quelconque des revendications 1 à 3, comprenant en outre un module de suppression de bruit de bruit gaussien (42) adapté à supprimer le bruit gaussien dans le deuxième signal audio qui est généré par le module de génération de signal (38).

**5.** Dispositif de suppression de bruit selon l'une quelconque des revendications 1 à 4, comprenant en outre :

une pluralité de modules de traitement (Um) qui sont prévus en correspondance avec une pluralité de premiers signaux audio qui sont générés par une pluralité de dispositifs de prélèvement d'audio (52-m) correspondants séparés entre eux, chaque module de traitement (Um) comprenant le module de suppression de bruit (36) et le module de génération de signal (38) pour fournir chaque deuxième signal audio ; et
un module d'amélioration (44) adapté à améliorer une composante particulière contenue dans chaque deuxième signal audio et qui est associée à du son arrivant au niveau du dispositif de prélèvement d'audio (52-m) correspondant à partir d'une direction spécifiée.

**6.** Procédé de suppression de bruit d'un premier signal audio pour générer un deuxième signal audio, le procédé comprenant :

acquérir une pluralité de composantes de bruit, qui sont différentes entre elles, à partir d'une pluralité d'intervalles d'extraction du premier signal audio, les intervalles d'extraction étant disposés de façon différente entre eux sur l'axe des temps du premier signal audio ;
générer chaque composante de suppression en supprimant chaque composante de bruit dans le premier signal audio, fournissant par cela une pluralité de composantes de suppression différentes entre elles en correspondance avec la pluralité de composantes de bruit, comprenant l'exécution séquentielle d'un traitement de suppression de la pluralité de composantes de bruit pour chaque temps élémentaire du premier signal audio ; et
générer le deuxième signal audio en additionnant la pluralité de composantes de suppression.

**7.** Support de stockage lisible par une machine pour utilisation dans un ordinateur, le support contenant des instructions de programme exécutables par l'ordinateur pour réaliser un procédé de traitement de suppression de bruit d'un premier signal audio pour générer un deuxième signal audio, le procédé comprenant :

un procédé d'acquisition de bruit consistant à acquérir une pluralité de composantes de bruit, qui sont différentes entre elles, à partir d'une pluralité d'intervalles d'extraction du premier signal audio, les intervalles d'extraction étant disposés de façon différente entre eux sur l'axe des temps du premier signal audio ;
un procédé de suppression de bruit consistant à générer chaque composante de suppression en supprimant chaque composante de bruit dans le premier signal audio, fournissant par cela une pluralité de composantes de suppression différentes entre elles en correspondance avec la pluralité de composantes de bruit, le module de suppression de bruit (36) exécutant séquentiellement un traitement de suppression sur la pluralité de composantes de bruit pour chaque temps élémentaire du premier signal audio ; et
un procédé de génération de signal consistant à générer le deuxième signal audio en additionnant la pluralité de composantes de suppression qui sont obtenues à partir du procédé de suppression de bruit.

# FIG.1

EP 2 360 685 B1

# FIG.2

NOISE PORTION       VOICE PORTION

$D_1$
$D_2$
$D_3$ ....
$D_K$

$N_1$ $N_2$ $N_3$    $N_K$

F

# FIG.3

- - - - COMPARATIVE EXAMPLE
——— EMBODIMENT

KURTOSIS

Fa1

Fa2

COEFFICIENT $\alpha$

# FIG.4

- - - - COMPARATIVE EXAMPLE
——— EMBODIMENT

MSE [dB]

Fb1

Fb2

COEFFICIENT $\alpha$

# FIG.5

EP 2 360 685 B1

# FIG.6

SIGNAL SUPPLY DEVICE — 12

STORAGE DEVICE — 24
$P_G$

AUDIO OUTPUT DEVICE — 14

100C

$x(t)$

22

FREQUENCY ANALYSIS UNIT — 32

$X(f)$

$X(f)$

GAUSSIAN NOISE SUPPRESSION UNIT — 42

NOISE ACQUISITION UNIT — 34

36

382   38

384

$N_1$ $[\mu_1(f)]$

SUPPRESSION PROCESSING UNIT $S_1$

$Y_1(f)$

$y_1(t)$

$y(t)$

$N_2$ $[\mu_2(f)]$

SUPPRESSION PROCESSING UNIT $S_2$

$Y_2(f)$

WAVEFORM SYNTHESIS UNIT

$y_2(t)$

SUMMATION UNIT

$N_K$ $[\mu_K(f)]$

SUPPRESSION PROCESSING UNIT $S_K$

$Y_K(f)$

$y_K(t)$

EP 2 360 685 B1

# FIG.7

EP 2 360 685 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4123835 B

**Non-patent literature cited in the description**

- The effect of the musical noise suppression in speech noise reduction using RSF. **OHTSUKI N et al.** COMMUNICATIONS AND INFORMATION TECHNOLOGY, 2004. ISCIT 2004. IEEE INTE RNATIONAL SYMPOSIUM ON SAPPORO. IEEE, 26 October 2004, vol. 2, 663-667
- **YOSHIHISA UEMURA et al.** Relationship Between Logarithmic Kurtosis Ratio and Degree of Musical Noise Generation on Spectral Subtraction. *The Institute of Electronics, Information and Communication Engineers, technical Report of IEICE,* 11 July 2008, vol. 108 (143), 43-48
- **Y. EPHRAIM ; D. MALAH.** Speech Enhancement Using a Minimum Mean-square Error Short-time Spectral Amplitude Estimator. *IEEE ASSP,* December 1984, vol. ASSP-32 (6), 1109-1121
- **T. LOTTER ; P. VARY.** Speech Enhancement By MAP Spectral Amplitude Estimation Using a Super-Gaussian Speech Model. *EURASIP Journal on Applied Signal Processing,* July 2005, vol. 2005 (7), 1110-1126